(19) Europäisches Patentamt
European Patent Office
Office européen des brevets

(11) **EP 3 293 218 A1**

(12) **EUROPÄISCHE PATENTANMELDUNG**

(43) Veröffentlichungstag:
**14.03.2018   Patentblatt 2018/11**

(21) Anmeldenummer: **16188519.9**

(22) Anmeldetag: **13.09.2016**

(51) Int Cl.:
*C08G 18/48* (2006.01)        *C08G 18/76* (2006.01)
*C08K 5/00* (2006.01)          *C08K 5/13* (2006.01)
*C08G 101/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **LINDNER, Stefan**
**42857 Remscheid (DE)**

(74) Vertreter: **Levpat**
**c/o Covestro AG**
**Gebäude 4825**
**51365 Leverkusen (DE)**

(54) **VERFAHREN ZUR ERNIEDRIGUNG DER ALDEHYDEMISSIONEN VON POLYURETHANSCHAUMSTOFFEN**

(57)     Die vorliegende Erfindung betrifft ein Verfahren zur Herstellung von Polyurethanen mit erniedrigter Aldehydemission unter Verwendung hoher Mengen phenolischer Antioxidantien. Weiter betrifft die vorliegende Erfindung die aus diesem Verfahren erhältlichen Polyurethane, sowie den Einsatz solcher Polyurethane beispielsweise im Innenraum von Automobilen.

EP 3 293 218 A1

**Beschreibung**

Die vorliegende Erfindung betrifft ein Verfahren zur Herstellung von Polyurethanen mit erniedrigter Aldehydemission unter Verwendung hoher Mengen phenolischer Antioxidantien.

Weiter betrifft die vorliegende Erfindung die aus diesem Verfahren erhältlichen Polyurethane, sowie den Einsatz solcher Polyurethane beispielsweise im Innenraum von Automobilen.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Es ist bekannt, dass Werkstoffe zu Emissionen führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden, insbesondere von Formaldehyd und Acetaldehyd. Nachgewiesen werden diese Emissionen z.B. bei Messungen nach der VDA 275 (Flaschenmethode, 3h 60°C) oder auch nach der VDA 276 (Emissionskammerprüfung, 65°C).

Aufgabe der vorliegenden Erfindung war es, Polyurethane, insbesondere Polyurethanschaumstoffe, bereitzustellen, die eine nur geringe Aldehydemission, insbesondere eine nur geringe Formaldehyd- und Acetaldehydemission aufweisen. Die Emissionswerte sollten 160 $\mu$g/m$^3$ (VDA 276) nicht überschreiten. Darüberhinaus sollte auch die Emission anderer, die Gesundheit oder die Umwelt belastender Stoffe, insbesondere solcher Stoffe, die im Emissionstest nach VDA 278 detektiert werden können, weitestgehend vermieden werden.

Es wurde nun überraschend gefunden, dass die oben genannte technische Aufgabe durch ein Herstellverfahren, bei dem hohe Mengen an phenolischen Antioxidantien zugesetzt werden, gelöst wird.

Gegenstand der vorliegenden Erfindung ist daher ein Verfahren zur Herstellung von Polyurethanschaumstoffen durch Umsetzung von Komponente A enthaltend

A1 gegenüber Isocyanaten reaktionsfähige Wasserstoffatome aufweisende Verbindungen mit einer OH-Zahl gemäß DIN 53240 von $\geq$ 15 bis < 280 mg KOH/g,

A2 gegebenenfalls gegenüber Isocyanaten reaktionsfähige Wasserstoffatome aufweisende Verbindungen mit einer OH-Zahl gemäß DIN 53240 von $\geq$ 280 bis < 4000 mg KOH/g,

A3 Wasser und/oder physikalischen Treibmittel,

A4 ggf. Hilfs- und Zusatzstoffe wie

a) Katalysatoren,
b) oberflächenaktive Zusatzstoffe,
c) Pigmente oder Flammschutzmittel,

A5 ein oder mehrere phenolische Antioxidantien, ausgenommen 2,4-Dimethyl-6-octyl-phenol, 2,6-Di-t-butyl-4-methyl-phenol, 2,6-Di-t-butyl-4-ethyl-phenol, 2,6-Di-t-butyl-4-n-butylphenol, 2,2'-Methylenbis-(4-methyl-6-t-butyl-phenol) und 2,2'-Methylenbis-(4-ethyl-6-t-butyl-phenol),

mit

B Di- oder Polyisocyanaten,

wobei Komponente A5 in Mengen von $\geq$ 0,07 Gewichtsteilen, bevorzugt $\geq$ 0,08 Gewichtsteilen, besonders bevorzugt $\geq$ 0,1 Gewichtsteilen, bezogen auf 100 Gewichtsteile der Komponente A1, eingesetzt wird, und

wobei Komponente A neben dem Antioxidans A5 bis zu 0,01 Gewichtsteile ($\leq$ 0,01 Gewichtsteile), bezogen auf 100 Gewichtsteile der Komponente A1, an Antioxidantien, die Aminogruppen aufweisen, enthalten kann.

Gegenstand der vorliegenden Erfindung ist auch ein Verfahren, wie zuvor beschrieben, wobei

i) Komponente A neben dem Antioxidans A5 keine Antioxidantien enthält, die Aminogruppen aufweisen, oder
ii) Komponente A neben dem Antioxidans A5 keine anderen Antioxidantien enthält.

Ebenso sind die nach den beschriebenen Verfahren erhältlichen Polyurethanschaumstoffe ein Gegenstand der vorliegenden Erfindung.

Der prinzipielle Einsatz von Antioxidantien zur Stabilisierung des bei der Polyurethanherstellung verwendeten Polyols und zur Vermeidung von Kernverfärbungen des hergestellten Polyurethanschaumstoffs ist bekannt. So beschreibt US 4,070,304 B die Verwendung einer Kombination von phenolischen und aminischen Antioxidantien zu letztgenanntem Zweck (Spalte 3, Zeile 47 bis 50). US 4,070,304 B legt in keinster Weise die Verwendung hoher Mengen phenolischer Antioxidantien zur Erniedrigung der Aldehydemission nahe.

Die Verwendung aminischer Antioxidantien führt im Emissionstest nach VDA 278 zu hohen Werten. Die Emission von Aminen sollte aus umwelt- und gesundheits-hygienischen Gründen vermieden werden, bzw. zumindest so gering wie möglich gehalten werden.

Da US 4,070,304 B aber gerade auf der Verwendung von aminischen Antioxidantien besteht, lehrt sie vom Gegenstand der vorliegenden Erfindung weg.

Bevorzugte Ausführungsformen und Beschreibung der Komponenten

Gegenstand der vorliegenden Erfindung ist insbesondere ein Verfahren zur Herstellung von Polyurethanschaumstoffen durch Umsetzung von Komponente A enthaltend

A1 75 bis 99,5 Gew.-Teile, bevorzugt 89 bis 97,7 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 280 mg KOH/g,

A2 0 bis 10 Gew.-Teile, bevorzugt 0,1 bis 2 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 280 bis < 4000 mg KOH/g,

A3 0,5 bis 25 Gew.-Teile, bevorzugt 2 bis 5 Gew.-Teile (bezogen auf die Summe der Gew.-Teile der Komponenten A1 bis A4) Wasser und/oder physikalische Treibmittel,

A4 0 bis 10 Gew.-Teile, bevorzugt 0,2 bis 4 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente oder Flammschutzmittel,

A5 $\geq$ 0,07 Gewichtsteile, bevorzugt > 0,08 Gewichtsteile, besonders bevorzugt > 0,1 Gewichtsteile (bezogen auf 100 Gewichtsteile der Komponente A1 ein oder mehrerer phenolischer Antioxidantien, ausgenommen 2,4-Dimethyl-6-ocytyl-phenol, 2,6-Di-t-butyl-4-methyl-phenol, 2,6-Di-t-butyl-4-ethyl-phenol, 2,6-Di-t-butyl-4-n-butyl-phenol, 2,2'-Methylenbis-(4-methyl-6-t-butyl-phenol) und 2,2'-Methylenbis-(4-ethyl-6-t-butyl-phenol), mit

B Di- oder Polyisocyanaten, wobei Komponente A neben dem Antioxidans A5 bis zu 0,01 Gewichtsteile ($\leq$ 0,01 Gewichtsteile), bezogen auf 100 Gewichtsteile der Komponente A1, an Antioxidantien, die Aminogruppen aufweisen, enthalten kann, und

wobei die Herstellung bei einer Kennzahl von 50 bis 250, bevorzugt 70 bis 130, besonders bevorzugt 75 bis 115 erfolgt, und

wobei alle Gewichtsteilangaben der Komponenten A1 bis A4 in der vorliegenden Anmeldung so normiert sind, dass die Summe der Gewichtsteile der Komponenten A1+A2+A3+A4 in der Zusammensetzung 100 ergibt.

Gegenstand der vorliegenden Erfindung ist auch ein Verfahren, wie zuvor beschrieben, wobei

i) Komponente A neben dem Antioxidans A5 keine Antioxidantien enthält, die Aminogruppen aufweisen, oder

ii) Komponente A neben dem Antioxidans A5 keine anderen Antioxidantien enthält.

Ein weiterer Gegenstand der Erfindung ist die Verwendung phenolischer Antioxidantien, ausgenommen 2,4-Dimethyl-6-ocytyl-phenol, 2,6-Di-t-butyl-4-methyl-phenol, 2,6-Di-t-butyl-4-ethyl-phenol, 2,6-Di-t-butyl-4-n-butyl-phenol, 2,2'-Methylenbis-(4-methyl-6-t-butyl-phenol) und 2,2'-Methylenbis-(4-ethyl-6-t-butyl-phenol), in Verfahren zur Herstellung von Polyurethanen, bevorzugt Polyurethanschaumstoffen zur Erniedrigung der Aldehydemission der resultierenden Polyurethane, bzw. Polyurethanschaumstoffe, dadurch gekennzeichnet dass die phenolischen Antioxidantien in Mengen von $\geq$ 0,07 Gewichtsteilen, bevorzugt > 0,08 Gewichtsteilen, besonders bevorzugt $\geq$ 0,1 Gewichtsteilen, bezogen auf 100 Gewichtsteile einer in dem Herstellverfahren verwendeten Komponente, bei der es sich um gegenüber Isocyanaten reaktionsfähige Wasserstoffatome aufweisenden Verbindungen mit einer OH-Zahl gemäß DIN 53240 von $\geq$ 15 bis < 280 mg KOH/g handelt, eingesetzt werden, und neben den phenolischen Antioxidantien bis zu 0,01 Gewichtsteile ($\leq$ 0,01 Gewichtsteile) an Antioxidantien, die Aminogruppen aufweisen, enthalten sein können, ebenfalls bezogen auf 100 Gewichtsteile der Komponente, bei der es sich um die gegenüber Isocyanaten reaktionsfähige Wasserstoffatome aufweisenden Verbindungen mit einer OH-Zahl gemäß DIN 53240 von $\geq$ 15 bis < 280 mg KOH/g handelt.

Gegenstand der vorliegenden Erfindung ist auch die Verwendung, wie zuvor beschrieben, wobei

    i) neben den phenolischen Antioxidantien keine Antioxidantien enthalten sind, die Aminogruppen aufweisen, oder
    ii) neben den phenolischen Antioxidantien keine anderen Antioxidantien enthalten sind.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Es handelt sich dabei vorwiegend um Urethan- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Die Formteile haben bevorzugt eine Dichte zwischen 15 und 120 kg/m$^3$, besonders bevorzugt zwischen 30 und 90 kg/m$^3$.

Für die Herstellung der Schaumstoffe auf Isocyanatbasis können die nachfolgend näher beschriebenen Komponenten eingesetzt werden.

Komponente A1

Ausgangskomponenten gemäß Komponente A1 sind Verbindungen mit mindestens zwei gegenüber Isocyanten reaktionsfähigen Wasserstoffatomen mit einer OH-Zahl gemäß DIN 53240 von ≥ 15 bis < 280 mg KOH/g.

Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche mit einer OH-Zahl gemäß DIN 53240 von ≥ 20 bis ≤ 150 mg KOH/g, bevorzugt ≥ 20 bis ≤ 50 mg KOH/g, ganz besonders bevorzugt ≥ 25 bis ≤ 40 mg KOH/g, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyether sind erfindungsgemäß bevorzugt.

Als Hydroxylgruppen-aufweisende Verbindungen können auch Polymerpolyole, PHD-Polyole und PIPA-Polyole in Komponente A1 eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol, hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4 und eine Hydroxylzahl von ≥ 3 mg KOH/g bis ≤ 112 mg KOH/g (Molekulargewicht 500 bis 18000) aufweist. PIPA-Polyole sind in GB 2 072 204 A, DE 31 03 757 A1 und US 4 374 209 A eingehend beschrieben.

Für die Herstellung von Polyurethanschäumen im Kaltschaumverfahren werden bevorzugt mindestens zwei Hydroxylgruppen aufweisenden Polyether mit einer OH-Zahl gemäß DIN 53240 von > 20 bis < 50 mg KOH/g eingesetzt, wobei die OH-Gruppen zu > 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl > 25 bis < 40 mg KOH/g, ganz besonders bevorzugt > 25 bis < 35 mg KOH/g.

Komponente A2

Gegebenenfalls werden als Komponente A2 Verbindungen mit mindestens zwei gegenüber Isocyanaten reaktionsfähigen Wasserstoffatomen und einer OH-Zahl gemäß DIN 53240 von ≥ 280 bis < 4000 mg KOH/g, bevorzugt ≥ 400 bis ≤ 3000 mg KOH/g, besonders bevorzugt ≥ 1000 bis ≤ 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A2 werden in EP-A 0 007 502, Seiten 16 - 17, beschrieben.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden gegebenenfalls Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF2-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise TCPP), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren können beispielsweise aliphatische tertiäre Amine (beispielsweise Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff), und Zinn-Katalysatoren (wie beispielsweise Dibutylzinnoxid, Dibutylzinndilaurat, Zinnoctoat) eingesetzt werden.

Als Katalysatoren werden bevorzugt

$\alpha$) Harnstoff, Derivate des Harnstoffs und/oder
$\beta$) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.
Bevorzugt werden keine Zinn-Katalysatoren eingesetzt.

Komponente A5

Erfindungsgemäß umfasst Komponente A5 ein phenolisches Antioxidans.
Phenolische Antioxidantien sind beispielsweise Tetrakis[methylen(3,5-di-t-butyl-4-hydroxyhydrocinnamat)]methan, N,N'-1,6-hexamethylen-bis-3-(3,5-di-t-butyl-4-hydroxyphenyl)-propionamid, Alkyl-3-(3,5-di-t-butyl-4-hydroxyphenylpropionat) wobei Alkyl einen Kohlenstoffrest mit $\geq$ 1 C-Atom, bevorzugt $\geq$ 6 C-Atomen, besonders bevorzugt $\geq$ 8 C-Atomen, ganz besonders bevorzugt $\geq$ 9 C-Atomen umfasst (wie z.B. Octadecyl-3-(3,5-di-t-butyl-4-hydroxyphenylpropionat)), Ethylen-(bisoxyethylen)bis-(3,(5-t-butylhydroxy-4-tolyl)-propionat 4,4'-Butylidenbis-(6-t-butyl-3-methylphenol) und/oder Tocopherole wie beispielsweise $\alpha$-Tocopherol, $\beta$-Tocopherol, $\gamma$-Tocopherol, $\delta$-Tocopherol und deren Mischun-gen (Vitamin E).

Bevorzugt werden als Komponente A5 Verbindungen eingesetzt mit einem Molekulargewicht von $\geq$ 380 g/mol, besonders bevorzugt > 400 g/mol, ganz besonders bevorzugt > 500 g/mol eingesetzt. Bevorzugt werden als Komponenten A5 Verbindungen eingesetzt mit $\geq$ 25 C-Atomen, besonders bevorzugt > 26 C-Atomen, ganz besonders bevorzugt $\geq$ 30 C-Atomen.

Die Einsatzmenge der erfindungsgemäßen Komponente A5, bezogen auf 100 Gewichtsteile der Komponente A1, beträgt $\geq$ 0,07 Gewichtsteile, bevorzugt $\geq$ 0,08 Gewichtsteile, besonders bevorzugt > 0,1 Gewichtsteile. Die Maximale Einsatzmenge der Komponente A5 beträgt bevorzugt $\leq$ 0,4 besonders bevorzugt $\leq$ 0,3 und ganz besonders bevorzugt 0,25 Gewichtsteile, bezogen auf 100 Gewichtsteile der Komponente A1.

In einer besonderen Ausführungsform enthält Komponente A neben dem Antioxidans A5 > 0,05 bis $\leq$ 4,0, bevorzugt > 0,1 bis $\leq$ 1,0, besonders bevorzugt > 0,2 bis $\leq$ 0,4 Gewichtsteile Tris-dipropylenglycol-phosphit, bezogen auf 100 Gewichtsteile der Komponente A1.

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

$$Q(NCO)_n \qquad (V)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7-8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate" oder "Prepolymere"), insbesondere solche modifizierten Polyisocyanate, die sich vom 2,4- und/oder 2,6-Toluylendiisocyanat bzw. vom 4,4'- und/oder 2,4'- und/oder 2,2'- Diphenylmethandiisocyanat ableiten. Vorzugsweise wird als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI"), besonders bevorzugt mindestens eine Verbindung ausgewählt aus der Gruppe bestehend aus 4,4'-und 2,4'- und 2,2'-Diphenylmethandiisocyanat und Polyphenylpolymethylenpolyisocyanat ("Mehrkern-MDI") eingesetzt.

Die Gemische aus Diphenylmethandiisocyanat und Polyphenylenpolymethylenpolyisocyanat (pMDI) haben einen bevorzugten Monomergehalt zwischen 50 und 100 Gew.-%, bevorzugt zwischen 60 und 95 Gew.-%, besonders bevorzugt zwischen 75 und 90 Gew.-%. Der NCO-Gehalt des verwendeten Polyisocyanates sollte vorzugsweise über 25 Gew.-%, bevorzugt über 30 Gew.-%, besonders bevorzugt über 31,4 Gew.% liegen. Vorzugsweise sollte das eingesetzte MDI einen Gehalt an 2,4'-Diphenylmethandiisocyanat von mindestens 3 Gew.-%, bevorzugtmindestens 15 Gew.-% aufweisen.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die PUR-Schaumstoffe können als Form- oder auch als Blockschaumstoffe hergestellt werden. Vorzugsweise werden sie als Formschaumstoffe hergestellt.

Die Formschaumstoffe können im Heiß- oder Kaltschaumverhalten hergestellt werden, bevorzugt ist das Kaltschaumverfahren

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteile sowie die Formteile selbst.

Die nach der Erfindung erhältlichen Polyurethanschaumstoffe finden beispielsweise Anwendung in Möbelpolsterungen, Textileinlagen, Matratzen, Automobilsitze, Kopfstützen, Armlehnen, Schwämme und Bauelemente, sowie Sitz- und Armaturverkleidungen, und weisen Kennzahlen von 50 bis 250, bevorzugt 70 bis 130, besonders bevorzugt 75 bis 115 auf.

Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (VI)$$

Beispiele

Herstellung von Polyurethan-Weichformschaumstoffen

In für die Herstellung von Polyurethan-Weichformschaumstoffen im Kaltschaumschaumverfahren üblicher Verarbeitungsweise nach dem Einstufenverfahren werden die in den Beispielen der in der nachfolgenden Tabelle aufgeführten Einsatzstoffe miteinander zur Reaktion gebracht. Das Reaktionsgemisch wird in eine auf 60 °C geheizte und vorher mit einem Trennmittel (PURA E1429H NV (Chem-Trend)) bestrichene Metallform eingebracht und die Form anschließend geschlossen. Die Einsatzmenge wird entsprechend der angestrebten Rohdichte und Formenvolumen verwendet. Es wurde mit 9,7 Liter Form gearbeitet. Die Dichte der Formteile beträgt 50 kg/m$^3$. Die Formteile wurden nach 4 Minuten entformt und aufgedrückt. Die Formteile wurden nach 4 Stunden in Aluminium-Verbundfolie versiegelt und danach zur Emissionsprüfung verschickt.

Einsatzstoffe:

Polyol A: Glyzerin gestartetes Polyol mit einer OH-Zahl gemäß DIN 53240 von 27 mg KOH/g. KOH katalysiert wurde das Glyzerin zuerst propoxyliert (85%) und und danack ethoxyliert (15%). Das Produkt enthält 85 mol-% primäre OH-Gruppen (bestimmt mittels $^1$H-NMR (Bruker DPX 400, Deuterochloroform).

Polyol B: EO- reiches Polyol: Desmophen 41WB01; Produkt von Covestro

Tegostab B8715LF2: Produkt von Evonik Irganox 1076: Produkt von BASF; Octadecyl 3-(3,5-di-tert-butyl-4-hydroxyphenyl)propionate CAS-Nummer 2082-79-3

Niax color stabilizer CS-22LF: Produkt von Momentive. Chemische Charakterisierung: Tris-dipropylenglycol-phosphit

Jeffcat ZR50: Produkt von Huntsman

Dabco NE 300: Produkt von Air Products

MDI: Mischung aus aus Diphenylmethandiisocyanat und

Polyphenylenpolymethylenpolyisocyanat (pMDI) mit einem monomeren Diphenylmethandiisocyanatgehalt von ca. 82 Gew-%. Der 2,4'-Diphenylmethandiisocyanat beträgt ca. 19 Gew-%. Der NCO-Gehalt beträgt 32,6 Gew- %.

Versuchsvorschrift

VDA 276: Bestimmung organischer Emissionen aus Bauteilen des KFZ-Innenraums in einer 1m$^3$ Prüfkammer, Prüfstandard des Verbandes der Automobilindustrie. Konditionierungsphase 1.

Ergebnisse:

|  | Vergleich 1 | 2 | 3 | 4 | 5 |
|---|---|---|---|---|---|
| Polyol A | 98,0 | 98,0 | 98,0 | 98,0 | 98,0 |
| Polyol B | 2,0 | 2,0 | 2,0 | 2,0 | 2,0 |
| Wasser (zugesetzt) | 3,5 | 3,5 | 3,5 | 3,5 | 3,5 |
| Diethanolamin | 1,2 | 1,2 | 1,2 | 1,2 | 1,2 |
| Tegostan B8715LF2 | 1,0 | 1,0 | 1,0 | 1,0 | 1,0 |

(fortgesetzt)

| | Vergleich 1 | 2 | 3 | 4 | 5 |
|---|---|---|---|---|---|
| Irganox 1076 | 0,04 | 0,12 | 0,20 | 0,12 | 0,12 |
| Niax_CS-22LF, color stabilizer | | | | 0,1 | 0,3 |
| Jeffcat ZR50 | 0,4 | 0,4 | 0,4 | 0,4 | 0,4 |
| Dabco NE300 | 0,1 | 0,1 | 0,1 | 0,1 | 0,1 |
| | | | | | |
| **Isocyanat** | | | | | |
| MDI | 61,3 | 61,3 | 61,3 | 61,3 | 61,3 |
| | | | | | |
| **Index (100 NCO/OH)** | 100 | 100 | 100 | 100 | 100 |
| | | | | | |
| **Ergebnis VDA 276-1** | | | | | |
| **Formaldehyd [μg/kg]** | 179 | 156 | 136 | 77 | 41 |
| **Acetaldehyd [μg/kg]** | 23 | 18 | 14 | 20 | 27 |
| **Acrolein [μg/kg]** | 23 | 19 | 18 | 10 | 3 |
| **Propionaldehyd [μg/kg]** | 36 | 36 | 32 | 40 | 41 |

**Patentansprüche**

1. Verwendung phenolischer Antioxidantien, ausgenommen 2,4-Dimethyl-6-octyl-phenol, 2,6-Di-t-butyl-4-methyl-phenol, 2,6-Di-t-butyl-4-ethyl-phenol, 2,6-Di-t-butyl-4-n-butyl-phenol, 2,2'-Methylenbis-(4-methyl-6-t-butyl-phenol) und 2,2'-Methylenbis-(4-ethyl-6-t-butylphenol), in Verfahren zur Herstellung von Polyurethanen, bevorzugt Polyurethanschaumstoffen zur Erniedrigung der Aldehydemission der resultierenden Polyurethane, bzw. Polyurethanschaumstoffe, **dadurch gekennzeichnet dass** die phenolischen Antioxidantien in Mengen von ≥ 0,07 Gewichtsteilen, bevorzugt > 0,08 Gewichtsteilen, besonders bevorzugt ≥ 0,1 Gewichtsteilen eingesetzt werden und neben den phenolischen Antioxidantien bis zu 0,01 Gewichtsteile (≤ 0,01 Gewichtsteile) an Antioxidantien, die Aminogruppen aufweisen, eingesetzt werden können, wobei die Mengenangabe dieser beiden Komponenten jeweils bezogen ist auf 100 Gewichtsteile einer in dem Herstellverfahren verwendeten Komponente, bei der es sich um gegenüber Isocyanaten reaktionsfähige Wasserstoffatome aufweisenden Verbindungen mit einer OH-Zahl gemäß DIN 53240 von ≥ 15 bis < 280 mg KOH/g handelt.

2. Verfahren zur Herstellung von Polyurethanschaumstoffen durch Umsetzung von Komponente A enthaltend

A1 gegenüber Isocyanaten reaktionsfähige Wasserstoffatome aufweisende Verbindungen mit einer OH-Zahl gemäß DIN 53240 von ≥ 15 bis < 280 mg KOH/g,
A2 gegebenenfalls gegenüber Isocyanaten reaktionsfähige Wasserstoffatome aufweisende Verbindungen mit einer OH-Zahl gemäß DIN 53240 von ≥ 280 bis < 4000 mg KOH/g,
A3 Wasser und/oder physikalischen Treibmittel,
A4 ggf. Hilfs- und Zusatzstoffe wie

a) Katalysatoren,
b) oberflächenaktive Zusatzstoffe,
c) Pigmente oder Flammschutzmittel,

A5 ein oder mehrere phenolische Antioxidantien, ausgenommen 2,4-Dimethyl-6-ocytyl-phenol, 2,6-Di-t-butyl-4-methyl-phenol, 2,6-Di-t-butyl-4-ethyl-phenol, 2,6-Di-t-butyl-4-n-butyl-phenol, 2,2'-Methylenbis-(4-methyl-6-t-butyl-phenol) und 2,2'-Methylenbis-(4-ethyl-6-t-butyl-phenol),
mit

B Di- oder Polyisocyanaten,

wobei Komponente A5 in Mengen von ≥ 0,07 Gewichtsteilen bezogen auf 100 Gewichtsteile der Komponente A1, eingesetzt wird, und

wobei Komponente A neben dem Antioxidans A5 bis zu 0,01 Gewichtsteile (≤ 0,01 Gewichtsteile), bezogen auf 100 Gewichtsteile der Komponente A1, an Antioxidantien, die Aminogruppen aufweisen, enthalten kann.

3. Verfahren gemäß Anspruch 2 oder Verwendung gemäß Anspruch 1, wobei neben den phenolischen Antioxidantien keine Antioxidantien enthalten sind, die Aminogruppen aufweisen.

4. Verfahren gemäß Anspruch 2 oder Verwendung gemäß Anspruch 1, wobei neben den phenolischen Antioxidantien keine anderen Antioxidantien enthalten sind.

5. Verfahren gemäß einem der Ansprüche 1 bis 4 wobei Komponente A enthält

A1 75 bis 99,5 Gew.-Teile, bevorzugt 89 bis 97,7 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 280 mg KOH/g,

A2 0 bis 10 Gew.-Teile, bevorzugt 0,1 bis 2 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 280 bis < 4000 mg KOH/g,

A3 0,5 bis 25 Gew.-Teile, bevorzugt 2 bis 5 Gew.-Teile (bezogen auf die Summe der Gew.-Teile der Komponenten A1 bis A4) Wasser und/oder physikalische Treibmittel,

A4 0 bis 10 Gew.-Teile, bevorzugt 0,2 bis 4 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente oder Flammschutzmittel,

A5 ≥ 0,07 Gewichtsteile (bezogen auf 100 Gewichtsteile der Komponente A1) ein oder mehrerer phenolischer Antioxidantien, ausgenommen 2,4-Dimethyl-6-ocytyl-phenol, 2,6-Di-t-butyl-4-methyl-phenol, 2,6-Di-t-butyl-4-ethyl-phenol, 2,6-Di-t-butyl-4-n-butyl-phenol, 2,2'-Methylenbis-(4-methyl-6-t-butyl-phenol) und 2,2'-Methylenbis-(4-ethyl-6-t-butyl-phenol),

und wobei die Herstellung bei einer Kennzahl von 50 bis 250, bevorzugt 70 bis 130, besonders bevorzugt 75 bis 115 erfolgt, und

wobei alle Gewichtsteilangaben der Komponenten A1 bis A4 in der vorliegenden Anmeldung so normiert sind, dass die Summe der Gewichtsteile der Komponenten A1+A2+A3+A4 in der Zusammensetzung 100 ergibt.

6. Verfahren gemäß einem der Ansprüche 2 bis 5, wobei Komponente A5 in Mengen von ≥ 0,08 Gewichtsteilen, bevorzugt ≥ 0,1 Gewichtsteilen, bezogen auf 100 Gewichtsteile der Komponente A1, eingesetzt wird.

7. Verfahren gemäß einem der Ansprüche 2 bis 6, wobei als Komponente A5 Verbindungen mit einem Molekulargewicht von ≥ 380 g/mol, besonders bevorzugt ≥ 400 g/mol, ganz besonders bevorzugt > 500 g/mol eingesetzt werden.

8. Verfahren gemäß einem der Ansprüche 2 bis 7, wobei als Komponente A5 Verbindungen mit ≥ 25 C-Atomen, besonders bevorzugt ≥ 26 C-Atomen, ganz besonders bevorzugt ≥ 30 C-Atomen eingesetzt werden.

9. Verfahren gemäß einem der Ansprüche 2 bis 8, wobei als Komponente A5 Tetrakis[methylen(3,5-di-t-butyl-4-hydroxyhydrocinnamat)]methan, N,N'-1,6-hexamethylen-bis-3-(3,5-di-t-butyl-4-hydroxyphenyl)-propionamid, Alkyl-3-(3,5-di-t-butyl-4-hydroxy-phenylpropionat), wobei Alkyl einen Kohlenstoffrest mit ≥ 1 C-Atom, bevorzugt ≥ 6 C-Atomen, besonders bevorzugt > 8 C-Atomen, ganz besonders bevorzugt > 9 C-Atomen umfasst (wie z.B. Octadecyl-3-(3,5-di-t-butyl-4-hydroxyphenylpropionat)), Ethylen-(bisoxyethylen)bis-(3,(5-t-butylhydroxy-4-tolyl)-propionat) 4,4'-Butylidenbis-(6-t-butyl-3-methylphenol) und/oder Tocopherole wie beispielsweise α-Tocopherol, β-Tocopherol, γ-Tocopherol, δ-Tocopherol und deren Mischungen (Vitamin E) eingesetzt werden.

10. Verfahren gemäß einem der Ansprüche 2 bis 9, wobei Komponente A neben dem Antioxidans A5 > 0,05 bis ≤ 4,0, bevorzugt > 0,1 bis ≤ 1,0, besonders bevorzugt > 0,02 bis ≤ 0,4 Gewichtsteile Tris-dipropylenglycol-phosphit, bezogen auf 100 Gewichtsteile der Komponente A1, enthält.

11. Verfahren gemäß einem der Ansprüche 2 bis 10, wobei Komponente B ausgewählt ist aus der Gruppe bestehend aus 2,4- und 2,6-Toluylendiisocyanat, 4,4'- und 2,4'- und 2,2'-Diphenylmethandiisocyanat, Polyphenylpolymethylenpolyisocyanat ("Mehrkern-MDI"), und Carbodiimidgruppen, Urethangruppen, Allophanatgruppen, Isocyanuratgruppen, Harnstoffgruppen oder Biuretgruppen aufweisenden Polyisocanaten, die sich vom 2,4- und/oder 2,6-Toluylendiisocyanat bzw. vom 4,4'- und/oder 2,4'- und/oder 2,2'-Diphenylmethandiisocyanat ableiten.

12. Polyurethanschaumstoffe, erhältlich nach einem Verfahren gemäß einem der Ansprüche 2 bis 11.

13. Polyurethanschaumstoffe gemäß Anspruch 12 mit Kennzahlen von 50 bis 250, bevorzugt 70 bis 130, besonders bevorzugt 75 bis 115.

14. Polyurethanschaumstoffe gemäß Anspruch 12 oder 13, wobei es sich um Formschaumstoffe handelt.

15. Verwendung der Polyurethanschaumstoffe gemäß einem der Ansprüche 12 bis 14 zur Herstellung von Möbelpolsterungen, Textileinlagen, Matratzen, Automobilsitze, Kopfstützen, Armlehnen, Schwämme und Bauelemente, sowie Sitz- und Armaturverkleidungen.

**Europäisches Patentamt**

**European Patent Office**

**Office européen des brevets**

# EUROPÄISCHER RECHERCHENBERICHT

Nummer der Anmeldung

EP 16 18 8519

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 348 514 B1 (CALABRESE RONALD A [US] ET AL) 19. Februar 2002 (2002-02-19) * Spalte 4, Zeilen 45-54; Anspruch 9 * ----- | 1-15 | INV. C08G18/48 C08G18/76 C08K5/00 |
| X | EP 0 705 872 A2 (BAYER AG [DE]) 10. April 1996 (1996-04-10) * Ansprüche 1,2; Beispiel 1 * ----- | 1-15 | C08K5/13 C08G101/00 |
| X | EP 0 312 927 A2 (BASF AG [DE]) 26. April 1989 (1989-04-26) * Ansprüche 2,3 * ----- | 1-15 | |

RECHERCHIERTE SACHGEBIETE (IPC)

C08G
C08K

Der vorliegende Recherchenbericht wurde für alle Patentansprüche erstellt

| Recherchenort | Abschlußdatum der Recherche | Prüfer |
|---|---|---|
| München | 17. Februar 2017 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 18 8519

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2017

| Im Recherchenbericht angeführtes Patentdokument | Datum der Veröffentlichung | Mitglied(er) der Patentfamilie | Datum der Veröffentlichung |
|---|---|---|---|
| US 6348514 B1 | 19-02-2002 | AT 255615 T<br>BR 9815386 A<br>CA 2302707 A1<br>DE 69820285 D1<br>DE 69820285 T2<br>EP 1023377 A1<br>ES 2212350 T3<br>US 6348514 B1<br>WO 9916821 A1 | 15-12-2003<br>21-11-2000<br>08-04-1999<br>15-01-2004<br>14-10-2004<br>02-08-2000<br>16-07-2004<br>19-02-2002<br>08-04-1999 |
| EP 0705872 A2 | 10-04-1996 | EP 0705872 A2<br>JP H08113701 A<br>US 5695689 A | 10-04-1996<br>07-05-1996<br>09-12-1997 |
| EP 0312927 A2 | 26-04-1989 | DE 3735577 A1<br>EP 0312927 A2<br>JP 2583588 B2<br>JP H01135864 A<br>US 4925888 A | 03-05-1989<br>26-04-1989<br>19-02-1997<br>29-05-1989<br>15-05-1990 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4070304 B
- DE 1694142 A
- DE 1694215 A
- DE 1720768 A
- EP 0007502 A
- US 4089835 A
- US 4260530 A
- GB 2072204 A
- DE 3103757 A1
- US 4374209 A
- EP 0000389 A
- EP 0176013 A
- EP 355000 A

**In der Beschreibung aufgeführte Nicht-Patentliteratur**

- Polyurethane, herausgegeben von Vieweg und Höchtlein. Kunststoff-Handbuch. Carl Hanser Verlag, 1966, vol. VII
- **G. OERTEL.** Neuauflage dieses Buches, herausgegeben. Carl Hanser Verlag München, 1993
- Kunststoff-Handbuch. Carl-Hanser-Verlag, 1993, vol. VII, 104-127
- **W. SIEFKEN.** *Justus Liebigs Annalen der Chemie,* vol. 562, 75-136
- herausgegeben von Vieweg und Höchtlen. Kunststoff-Handbuch. Carl-Hanser-Verlag, 1993, vol. VII, 139-265
- *CHEMICAL ABSTRACTS,* 2082-79-3